# EUROPEAN PATENT APPLICATION

(11) **EP 1 657 667 A1**
(43) Date of publication of application: **17.05.2006**
(21) Application number: 05024172.8
(22) Date of filing: 05.11.2005
(51) Int. Cl.: G06K 19/077

(54) **Contactless smart cards and process for their manufacture**

(30) Priority: 15.11.2004 IT MI20042185
(71) Applicant: MF Group S.p.A., 40040 Rioveggio BO (IT)
(72) Inventor: Matalucci, Stefano, 20129 Milano (IT); Mucelli, Sandro, 30027 San Donà di Piave (VE) (IT)
(74) Representative: Incollingo, Italo

(57) **Abstract**

The contact less cards according to the invention comprise a central bearing core printed on the front and back sides, a smart label carrying the electric components (conductive wire coil and chips), and a covering label to protect said smart label.

## Description

The present invention relates to cards, so-called smart cards which do not need a contact to the relevant activation devices. More particularly the invention concerns contactless (or Wi - Fi) cards which substantially comprise a core inlet or body card, to which are associated electric components (such as a) coil of wires of conductive material, serigraphic lacquers, chips, printed layers and overlays.

The contactless (Wi-Fi and the like) cards, though recently introduced in commerce, have found an always increasing diffusion invading the major part of the fields initially of the magnetic cards and to day of the chip cards.

Several European Publications, such as EP n° 0929049, n° 1062635, n° 1201007, n° 1335486, and n° 1185955 and US Patents , such as USP n° 6,152,373, n° 6,586,633 and n° 5,809,633 describe examples of cards which do not require a material contact with the command devices.

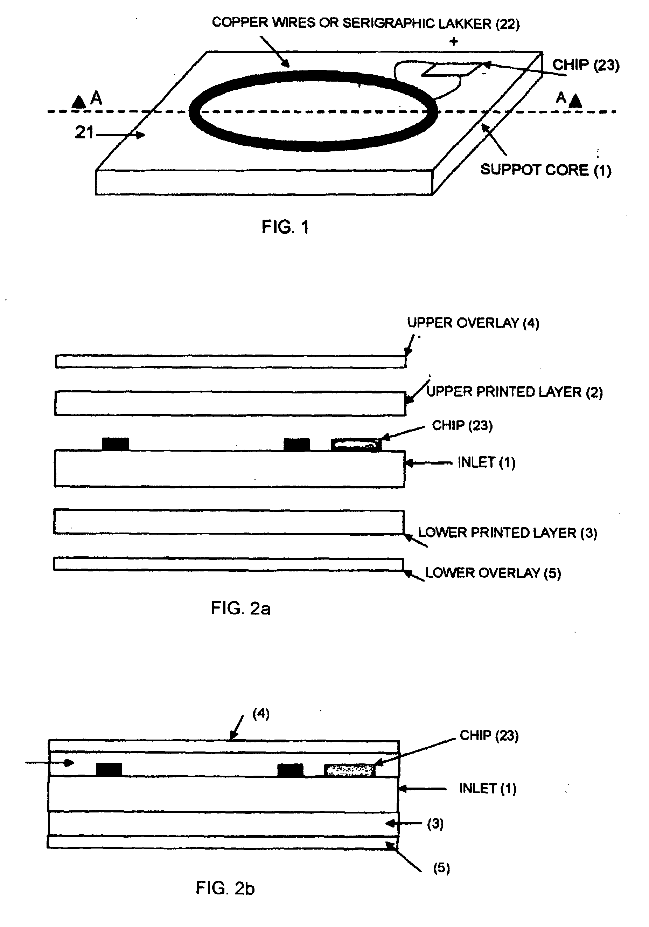

Emblematically the mostly used cards are of the type shown in figures 1 (exploded schematic prospective view), 2a (front cross section view), and 2b (compact cross section, as fig. 2a), with substantially comprise:
- A core card or inlet 1, on the upper face 21 of which are placed the circuit components consisting at least of an electrically conductive wire coil 22, at the ends of which is connected a micro chip 23 (generally of silicon and acting as a memory, a micro processor, operational circuit etc.);
- An upper layer 2 of front printing of the support core;
- A lower layer 3 of back printing of said support core;
- An upper overlay 4; and
- A lower overlay 5.

Generally the central support 1 is preferably in vinyl polymers or phtalic esters (PET), without excluding other synthetic materials or even, natural cellulose fibres. The layers 2 and 3 (even in form of sheets, films, coatings and the like) which carry printings also applied on the core upper and lower faces are preferably made of synthetic material and also the printing protecting overlays are made of materials substantially identical or compatible with the core 1 material: indeed the more homogeneous or compatible are the materials of the card various layers, the more resistant, compact and easy to work is said card.

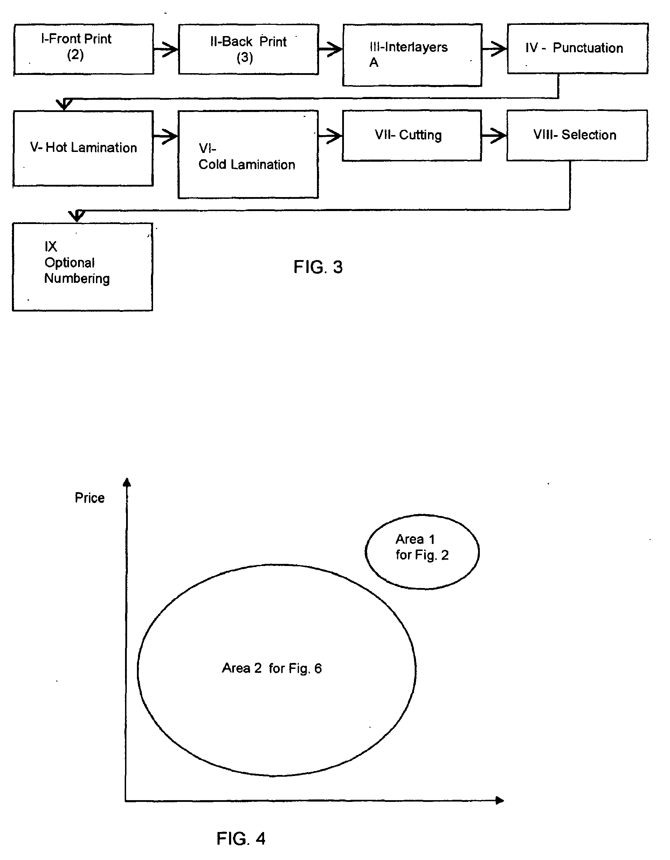

The smart cards of figures 1, 2 and 3 are precious products also and mainly because they must show a long use duration (life). In addition to their complexes structure, said cards are produced with the aid of extremely expensive and sophisticated process as emblematically shown in the block scheme of fig. 3, which consists substantially of following steps:
I) Application of the printing 2 on the upper front face of core 1;
II) Application of the lower printing 3;
III) Intercalary insertion;
IV) Punctuation;
V) Hot lamination (requiring at least 20 minutes);
VI) Cold lamination;
VII) Cutting;
VIII) Selection; and
IX) Optional progressive numeration of the cards:

As anticipated, the contact less (Wi - Fi) cards with the structure of figures 1, 2a, 2b, prepared with the aid of the process of fig. 3 (substantially consisting of nine steps) have decidedly high quality also because their "elite" users (VIP) demand a very long use life. Obviously the higher the quality the higher the cost of the product which, as shown in the diagram of fig. 4, have a very restricted area of buyers, as that indicated with the Area 1 in said diagram of fig. 4. It can be said that the conventional contactless cards are (up to now) for elite (VIP) people and, as such, are of interest to a low fraction (for example about 20%) of the users. But these people pay a lot of money for a card of long use of the type of figures 1 - 3, which card is often not entirely utilized for such long periods: on the contrary there is a basin (area) of possible users (at least four times that of the elite users), which do not need long use durations, what therefore does not justify the expenses of the high price purchase of the present cards.

First object of the present invention is to provide new contact less (Wi - Fi) cards which are to be used for periods not extremely long, are effective and reliable (practically as the conventional cards) but have a flexible structure and a price accessible to the major portion of the interested people.

An other object of the invention is to provide a process which be simple, flexible, compact, more effective and cheaper than the conventional process, and therefore allow the manufacture of contactless cards in shorter time and minor consumption of materials, therefore at a price accessible to the large mass of the mean people without the exigency of very long time use, at a parity of performances and reliability.

The contactless cards according to the invention, comprising in their core a card body of synthetic, artificial, or natural material, in particular of vinyl or terephtalic polymers or cellulose material coated with printing layers, are substantially characterized by a smart label which carries (embeds) the electric components in particular the conductive wire coil and the chip, is applied (even extemporaneously) on the two faces of the card central core, which is advantageously adapted, at the start, to several uses even different from the use of the Wi - Fi cards according to the invention, for example for re-chargeable cards, tickets and the like.

The process for the manufacture of the contactless cards of the invention, comprises at least:
- A unique (contemporaneous) printing phase (step) on the two lower and upper faces of said card central support;
- One phase (step) to apply on the upper face of said card central support, a smart label carrying the electric components in particular the conductive wire coils and chip; and
- A phase (step) of applying a protective label on said smart label.

The further characteristics of the invention are recited in the sub-claims at the end of this specification, which are however to be considered herewith incorporated.

The various features and advantages of the invention will clearly appear from the following description of the emblematic embodiment (preferred and not limitative) shown in the accompanying drawings in which:
- Figures 1 and 5 are schematic partial prospective views of a conventional card (fig. 1) and of a contactless card according to the invention (fig. 5);
- Figures 2a, 2b and 6 are schematic cross sections with planes having traces A-A in fig. 1 and B-B in fig. 5;
- Figures 3, 7, 8 and 9 are block schemes; and
- Figure 4 is a diagram quality (X) - price (Y).

As anticipated, an "elite" card (Wi - Fi) according to figures 1, 2a, 2b and 3 comprises: - a body card or inlet 1, on the upper face 21 of which are applied electronic components such as the electrically conductive wire coil 22 and the chip 23; - a first upper printed layer (film or sheet) 2; - a second lower printed layer 3; and two over layers, upper 4, lower 5.

The complex expensive process to manufacture these contactless cards is shown in fig. 3 and comprises not less than 9 steps (without, including the support-body 1 formation step):
I) Printing on the upper face or front of said bearing body 1:
II) Printing of the lower face or back 3 of same body;
III) Intercalary insertion;
IV) Punctuation;
V) Hot lamination (lam c in a time period generally longer than 20 minutes;
VI) Cold lamination (lam f);
VII) Cutting (tra);
VIII) Selection (sel); and
IX) Progressive numeration (num), (generally optional).

The so obtained cards show certainly: - high quality; - long use duration (life); - restricted number of "elite" (VIP) users who can afford the high costs thereof even if in several cases they not exploit said cards for their foreseen long period.

In the diagram of fig. 4 the elite card user basin is schematically indicated as Area 1 which represents the number of cards of high quality and price; said elite user basin is estimated as at least four times lower than the basin (Area 2) of the possible users not interested to the very long utilization duration but interested to the not exaggerated prices compatible with their reduced use.

Indicatively, if the total user basin is 100, it can be estimated that, if the elite users could be about 20%, the non-elite users would be 80%.

As an example, while the elite users belong to the group (rather restricted) of the annual subscribers of banking-, loyalty-, operators etc., the potential non elite user would be mainly the big distributors of cards, tickets and the like, f. i. the managers of shows, play parks, thickening, shelf life, fairs etc..

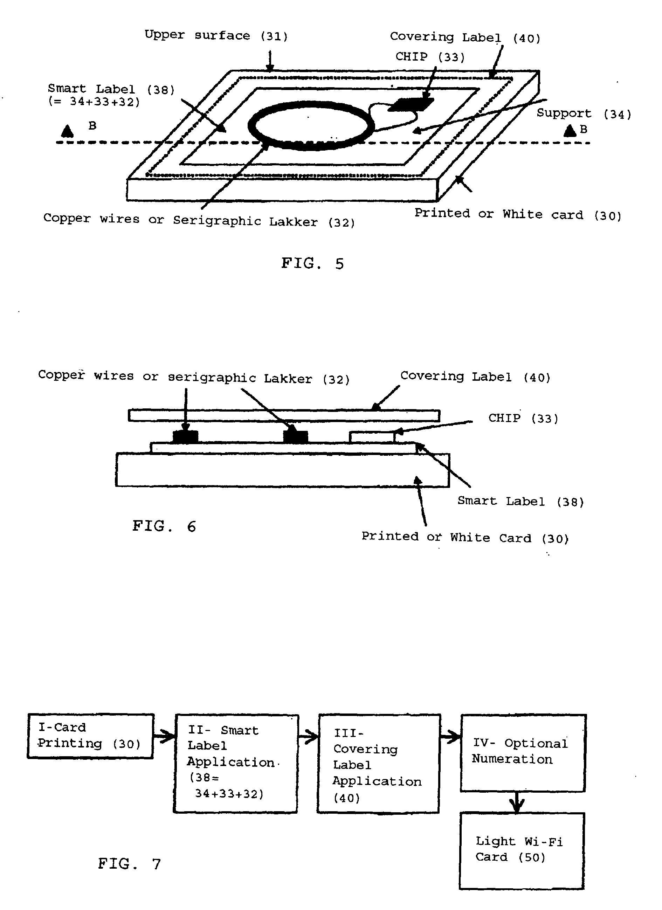

The contactless Wi - Fi cards according to the invention destined in particular to the users of non excessively long utilization, comprises now advantageously (see figures 5, 6 and 7):
I) A printed or white card 30; with
II) Only one same print on the two front and back faces of the central core 30;
III) A smart label 38 carrying on the upper face the electric components in particular the coil 31 of conductive wires 32 and the chip 33; and
IV) A usual label 40 to cover and protect the smart label and the circuits associated thereto.

The block scheme of fig. 7 is an emblematic, non limitative representation of the process according to the invention, comprising now:
I) Only one printing phase on the two faces of the bearing core 30;
II) One phase of application of the smart label 38 carrying the electric components 32 and 33;
III) One phase of applying the usual label 40 to cover or protect the smart label;
IV) An optional phase of numeration.

According to an advantageous feature of the invention, said central body 30 is prepared to be adapted to the utilization in any card type even different from the Wi - Fi cards in question, in which it can however be converted or better conditioned in any moment and with the modes according to the user requirements. As an example the body 30 can be utilized for the rechargeable cards.

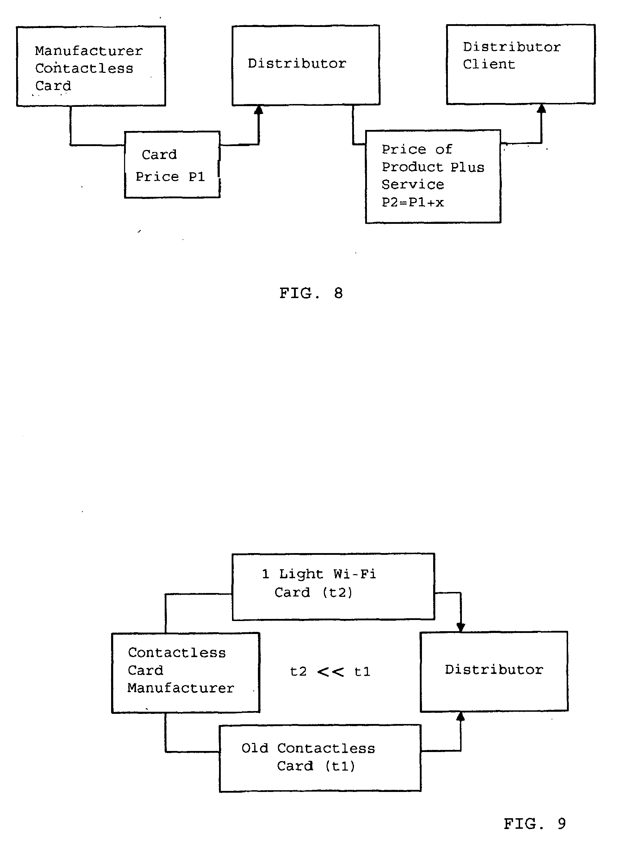

The scheme of fig. 8 illustrates briefly the course which may follow a multi-use, universal body 3 according to the invention.

The printed cards 30 manufacturer is now able to produce, on very large scale, the universal multiuse bodies 30 for the distributors (f. i. the managers of Fairs, shows etc.) who can buy them on large volumes, whereby the price PI of these cards 30 can be minimized.

The distributor can stock heavy amounts of printed or white cards (fig. 5) with low locking up of capital thanks to the low price PI obtained from the manufacturer. Big gradual batches of cards 30 will be conditioned to contactless cards 50 by the Operator-distributor according to their requirements and availabilities, minimizing thereby also this operation cost.

Price P2 = P1 + X (where X is the distributor's cost) will be also very low because PI is really low whereas X has been, on its turn, minimized because the service has been provided in conditions of maximal convenience.

In figure 9 has been emphasized the time aspect (also of extreme importance). The conventional contactless cards manufacturer needs a long time t1 whereas the same manufacturer will produce the same light Wi - Fi cards in a time t2 which is well shorter than t1.

Among the several advantages of the invention we limit our self to mention the following:
1) Cost;
2) Much shorter times are needed to market the light Wi - Fi cards;
3) Possibility to use the same (printed or not) card 30 for uses even different from those of the contactless cards;
4) To condition the card in contact less in batch and not in their totality f. i. of 1.000.000 cards are needed in ten events of 100,000 conventional cards, 1.000.000 cards must be produced with heavy locking up of costs; on the contrary for the light Wi - Fi cards according to the invention, 1.000.000 body cards must be produced which will be conditioned in 10 batches of 100.000 bodies to contactless cards but at the most convenient moments;
5) Low locking-ups of capital are requested to the client; if, in the old time, this client needed to stock conventional contactless cards, he immobilized said number of pieces at a high cost, now on the contrary said client immobilizes, at immobilization time parity, only the value of said body cards;
6) If and when a chip is to be changed (substituted), there is now no need to carry out search and development activities but it is possible to start immediately with the production; on the contrary, before the invention, when the chip for conventional cards changed, it was necessary to adapt and study the bodies 2 and 3 and the relevant overlays 4 and 5 in function of the new chip, whereas now according to the invention, a smart label is received with the new chip and it is sufficient to apply it to said body.
7) The contactless cards form indeed a large range of products as the printed or white cards can be made of paper (less expensive) but also of PET (more aesthetic but more expensive);
8) Usually the contactless cards are made of PVC which is a no recyclable material, whereas the new Wi - Fi cards according to the invention can be made of fully recoverable materials;
9) The covering label 40 can be white or printed and can even reproduce the graphic printed on the back side rendering thereby absolutely less visible the presence of the smart label and of the chip;
10) Said covering label 40 can have security characteristics (pre- cuts, wipe out, olograms etc.);
11) The speps II), III) and IV) of fig. 7 take place at the same machine passage whereas in the Prior Art the numeration took place ex-post the contactless cards production;
12) The Wi - Fi card can be rechargeable and have the same functions of the old contactless cards;
13) It is possible to self produce the cards with the aid of commercial machines of f. i. CIM S.p.A. (one machine applies the smart label, the second machine applies the white label and personalizes it thermografically).

For clarity scruple the invention has been described with reference to the embodiments shown in the accompanying drawings; said invention is however susceptible of all variants, modifications, substitutions, additions and the like which, being in the hand reach of the field mean skilled man are to be considered as comprised or falling within the scope and spirit of the present invention.

## Claims

1. Cards in particular of the Wi - Fi type, which are utilized without contacting the operational device, therefore so called contactless cards, comprising: - a central support (card inlet, core or body) of synthetic, artificial or natural material; - print layers on said central body faces; and - electronic components, in particular at least on electrically conductive wire coil, and a chip, **characterized by** a smart label carrying said electric components and applied on said central core upper face, and by an ordinary label protecting and/or covering said smart label.

2. Cards according to claim 1, wherein said central body is coated with a same unique printing layer 1 on its two major faces.

3. Cards according to claim 1, wherein said central support is of the universal (multi use) type in the sense that it can be utilized for applications even different from those of the Wi - Fi cards, in which applications said core is inserted and conditioned in times and modes successive and/or decided according to the distributor requirements.

4. Process to manufacture Wi - Fi cards and the like, at least comprising: - preparing a central inlet or card body; - printing on the faces of said support; - applying on it an electrically conductive wire coil and a chip, **characterized by**: - a step of applying on said support a smart label carrying said electronic components in particular a conductive wire coil and a chip: and - a step of applying a label to cover/protect said smart label.

5. Process according to claim 4, **characterized by** a unique step of a applying a same printing on both the upper and lower faces of said core.
